# EUROPÄISCHE PATENTSCHRIFT

(11) **EP 4 209 702 B1**
(45) Veröffentlichungstag und Bekanntmachung des Hinweises auf die Patenterteilung: **04.12.2024**
(21) Anmeldenummer: 22150433.5
(22) Anmeldetag: 06.01.2022
(51) Int. Cl.: F16L 41/02, F16L 59/16, F16L 59/18, F16L 59/02

(54) **ISOLIERTE BAUGRUPPE**
INSULATED ASSEMBLY
AGENCEMENT ISOLÉ

(43) Veröffentlichungstag der Anmeldung: 12.07.2023
(73) Patentinhaber: Georg Fischer Rohrleitungssysteme AG, 8201 Schaffhausen (CH)
(72) Erfinder: Breyer, Markus, 78315 Radolfzell (DE); Anello, Alessandro, 8200 Schaffhausen (CH)
(74) Vertreter: Fenner, Seraina

(56) Entgegenhaltungen:
- EP-A1- 2 418 744
- EP-A2- 0 272 363
- DE-A1- 3 729 083
- FR-A1- 2 559 874
- US-A- 5 797 415

## Beschreibung

Die Erfindung betrifft eine isolierte Baugruppe zur Verbindung von Rohrleitungen, beinhaltend, zwei Isolationshalbschalen aus einem isolierenden Kunststoff, jeweils eine Isolationshalbschale umgebende Gehäusehalbschale, wobei die Gehäusehalbschale die äussere Umfangmantelfläche der Isolationshalbschale umgibt und mindestens ein die Gehäusehalbschalen verbindendes Scharnier.

Bei Anwendungen bei denen eine gute Dämmung des Mediums in der Rohrleitung gegenüber den Umgebungsbedingungen benötigt wird, werden meist vorisolierte Rohrleitungen eingesetzt. Bspw. werden solch vorisolierte Rohrleitungen für den Transport bei Kälteträgermedien eingesetzt. Auch in der Gebäudetechnik können solche vorisolierten Rohrleitungen für die Verwendung von Klimaanlagen eingesetzt werden. Um das Medium transportierende Rohr ist meist eine isolierende Dämmschicht angeordnet die den Temperaturaustausch möglichst reduziert bzw. unterdrückt. Medium führende Rohrleitungen, die mit Kupplungen verbunden sind, sind meist an den Kupplungen nicht isoliert oder mit einem Isolationsmaterial verklebt wird, was keine optimale Isolation gewährleistet wie auch der Aufwand für das Anbringen der Isolation sehr zeitintensiv ist.

Die FR 2 559 874 offenbart eine selbstregulierende thermostatgesteuerte Heizbox mit schneller und wiederholbarer Montage und Demontage zum Erwärmen und Warmhalten von Geräten wie Flanschen, Ventilen, Pumpen und Rohrleitungselementen. Diese Vorrichtung besteht aus einem beheizten Gehäuse, das aus zwei Teilen besteht, die gelenkig miteinander durch ein Scharnier verbunden sein können. Die Vorrichtung kann aus einem Aussenmantel, einer Isolierung und einem Heizkern bestehen. Die Verriegelung des Ganzen erfolgt durch ein Schnellverschluss-System. Die thermische und elektrische Isolierung zwischen dem Heizkern und dem Aussenmantel wird durch einen bei Raumtemperatur polymerisierenden Schaumstoff mit hohem Temperaturwiderstand gewährleistet.

Die DE 37 23 394 A1 offenbart eine Dämmkassette für Armaturen und Flansche in Rohrleitungen. Nachteilig an der dargestellten Lösung ist, dass die Kassettenhälften als zwei Einzelteile ausgebildet sind und auch zum festen Verschliessen separate Bauteile benötigen, die gerne vergessen oder verloren gehen.

Die EP 2 418 744 A1 offenbart eine Dichtungsvorrichtung zum Abdichten eines Verbinders. Die Dichtungsvorrichtung beinhaltet zwei Dichtungshalbschalen die in ein klappbares Gehäuse eingelegt werden und dies dann um den Verbinder montiert wird um diesen Abzudichten. Diese Vorrichtung eignet sich jedoch nicht zur Isolation sondern dient nur der Abdichtung.

Es ist Aufgabe der Erfindung eine isolierte Baugruppe zur Verbindung von Rohrleitungen vorzuschlagen, welche das rasche Anschliessen von vorisolierten Rohrleitungen ermöglicht und Fittings gut isoliert sowie keine separaten Einzelteile benötigt werden um die Isolation anzubringen.

Diese Aufgabe wird erfindungsgemäss durch eine isolierte Baugruppe nach Anspruch 1 gelöst. Die isolierte Baugruppe beinhaltet mindestens eine von den Isolationshalbschalen formschlüssig umgebene Schnellkupplung, wobei an den Gehäusehalbschalen integral Verschlusselemente angeordnet sind.

Die erfindungsgemässe isolierte Baugruppe zum Verbinden von Rohrleitungen, beinhaltet zwei Isolationshalbschalen aus einem isolierenden Kunststoff, jeweils eine Isolationshalbschale umgebende Gehäusehalbschale, wobei die Gehäusehalbschale die äussere Umfangmantelfläche der Isolationshalbschale umgibt und mindestens ein, die Gehäusehalbschalen verbindendes Scharnier. Die Gehäusehalbschale umgibt die Isolationshalbschale nur an der konkavgebogenen Aussenseite der Isolationshalbschale. Die Gehäusehalbschalen sind über das Scharnier miteinander einteilig verbunden und vorzugsweise aus demselben Material hergestellt. Das Scharnier ist vorzugsweise integral zwischen den beiden Gehäusehalbschalen angeordnet. Vorzugsweise sind die beiden Gehäusehalbschalen und das Scharnier als Spritzgussteil ausgebildet. Besonders bevorzugt ist es, wenn die Gehäusehalbschalen inklusiv dem Scharnier durch umspritzen der beiden Isolationshabschalen hergestellt sind.

Wobei es alternativ auch vorstellbar ist, dass die Gehäusehalbschalen mit dem verbindenden Scharnier separat hergestellt sind vorzugsweise als ein Teil und das Scharnier integral zwischen den beiden Halbschalen angeordnet ist und die beiden Isolationshalbschalen anschliessend eingelegt werden.

Die erfindungsgemässe isolierte Baugruppe weist zudem mindestens eine von den Isolationshalbschalen formschlüssig umgebene Schnellkupplung auf und an den Gehäusehalbschalen sind integra Verschlusselemente angeordnet. Die eingesetzte Schnellkupplung zeichnet sich dadurch aus, dass das Rohrende durch blosses Einschieben bis zu einem Anschlag in der Schnellkupplung fixiert ist.

Es ist vorteilhaft wenn die Verschlusselemente einteilig an den Gehäusehalbschalen angeordnet und aus demselben Material sind. Die Verschlusselemente werden vorzugsweise direkt beim Spritzgiessen an die Gehäusehalbschale mitangespritzt.

Dadurch weist die erfindungsgemässe isolierte Baugruppe keine weiteren separaten Bauteile oder Komponenten auf, sondern besteht ausschliesslich aus der erfindungsgemässen isolierten Baugruppe und ist ohne weitere Komponenten oder Bauteile einsetz- und anwendbar. Dadurch können keine Bauteile verloren oder bei der Montage vergessen gehen.

Als bevorzugte Ausführungsform hat sich gezeigt, wenn die Verschlusselemente jeweils mindestens eine Verschlusslasche und einen Verschlusshaken aufweisen, wobei die Verschlusslasche im Verschlusshaken zum Schliessen der isolierten Baugruppe eingehängt wird. Es hat sich als vorteilhaft gezeigt, wenn an einer Gehäusehalbschale jeweils die Verschlusslaschen und an der gegenüberliegenden Gehäusehalbschale die Verschlusshaken integral angeordnet sind.

Vorzugsweise ist die Verschlusslasche elastisch ausgebildet, wodurch die Verschlusslaschen gespannt werden können und durch die erreichte Vorspannung der Verschlusslaschen die isolierte Baugruppe fest verschliesst.

Als vorteilhaft hat sich gezeigt, wenn die Verschlusselemente jeweils am Ende bzw. am äusseren Bereich eines jeden Anschlussstutzens angeordnet sind. Dadurch wird die isolierte Baugruppe gut verschlossen und springt an den Enden nicht auf. Ebenso als vorteilhaft hat sich gezeigt, wenn eine Verschlusslasche in der Verzweigung bzw. im Bogen angeordnet ist.

Als vorteilhaft hat sich gezeigt, wenn die Verschlusslasche zumindest teilweise um den Umfang des Anschlussstutzens der gegenüberliegenden Gehäusehalbschale anliegt. Dadurch werden die Anschlussstutzen zumindest teilweise von der Verschlusslasche umschlungen.

Vorzugsweise sind an der gegenüberliegenden Gehäusehalbschale Laschenaussparungen vorgesehen von denen die Verschlusslaschen formschlüssig aufgenommen werden. Vorzugsweise schliesst die äussere Oberfläche der Verschlusslaschen bündig mit der äusseren Oberfläche der Gehäusehalbschale ab. Dadurch steht die Verschlusslasche nirgends vor, wodurch ein ungewolltes Lösen einer Verschlusslasche vermieden werden kann.

Als weitere bevorzugte Ausführungsform hat sich gezeigt, wenn in den Anschlussstutzen jeweils ein Aufnahmering zum Umfassen der angeschlossenen, isolierten Rohrleitung angeordnete ist. Der Aufnahmering dient einer genauen Formgebung der vorisolierten Rohrleitung da diese sehr grossen Toleranzen unterworfen ist und mittels des Aufnahmerings erhält sie einen genau definierten Umfang, welcher von den beiden Isolationshabschalen formschlüssig umfasst wird. Dazu weist die Isolationshalbschale vorzugsweise eine konkave Aussparung auf, die der Form des Aufnahmerings entspricht und in der der Aufnahmering angeordnet ist.

Eine bevorzugte Ausführungsform besteht darin, dass die isolierte Baugruppe als T-Stück, Winkelstück, Muffe oder ähnliche Formstücke oder ausgebildet ist. Zudem ist es vorteilhaft, wenn analog der Anzahl der Anschlussstutzen auch Kupplungen vorzugsweise Schnellkupplungen in der isolierten Baugruppe angeordnet sind. Dies heisst, dass bei einem T-Stück drei und bei einem Winkelstück zwei Kupplungen vorzugsweise Schnellkupplungen in der isolierte Baugruppe vorhanden sind.

Vorzugsweise sind die Isolationshalbschalen aus einem der Kunststoffe PUR (Polyurethane), EPP (expandiertes Polypropylen) oder XPE (chemisch vernetzte Polyethylene) hergestellt, wobei die Kunststoffe vorzugsweise als Schaum ausgebildet sind.

Als vorteilhafte Ausführung hat sich gezeigt, wenn die Gehäusehalbschalen aus TPE (Thermoplastische Elastomere) hergestellt sind.

Als bevorzugte Ausführungsform hat sich gezeigt, wenn die Isolationshalbschalen gegenseitig ineinander steckbare Dicht-Positionselemente aufweisen um zueinander genau positioniert zu sein und die isolierte Baugruppe auch abdichten. Vorzugsweise weist die eine isolierte Baugruppe dazu eine Feder- und Nutverbindung auf, die beim Zusammenklappen ineinandergreifen. Vorzugsweise sind diese entlang der Kanten der Isolationshalbschalen angeordnet, welche beim Zusammenklappen der beiden Halbschalen aufeinander zu liegen kommen.

Alle Ausgestaltungmöglichkeiten sind untereinander frei kombinierbar.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine dreidimensionale Darstellung einer geschlossenen erfindungsgemässen isolierten Baugruppe,
- Fig. 2: eine dreidimensionale Darstellung einer geöffneten erfindungsgemässen isolierten Baugruppe,
- Fig. 3: eine dreidimensionale Darstellung einer geöffneten erfindungsgemässen isolierte Baugruppe ohne Kupplungen und
- Fig. 4: eine dreidimensionale Darstellung einer separaten Isolationshalbschale.

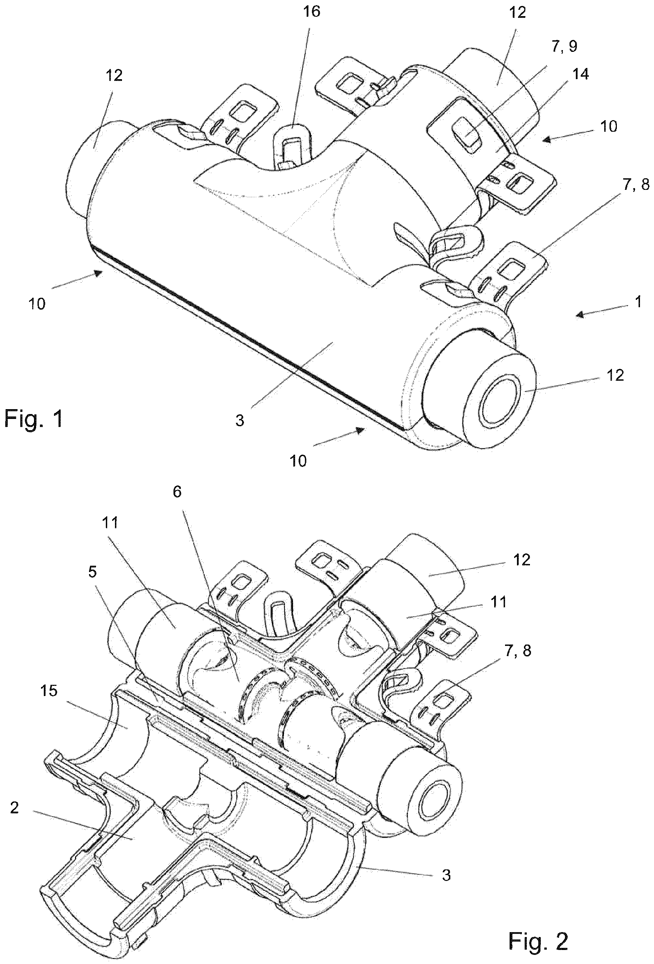

Die in Fig. 1 dargestellte Zeichnung zeigt eine dreidimensionale Darstellung einer erfindungsgemässen isolierten Baugruppe 1 bei der die beiden Halbschalen zusammengeklappt sind aber die Verschlusslaschen 8 der Verschlusselemente 7 noch nicht in den Verschlusshaken 9 eingehängt sind. Die Verschlusslaschen 8 sind elastisch ausgestaltet und sind direkt an der einen Gehäusehalbschale 3 mit angespritzt und werden dann in den Verschlusshaken 9 der gegenüberliegenden Gehäusehalbschale 3 eingehängt. Dadurch, dass die Verschlusshaken elastisch ausgebildet sind, wird beim Einhängen in die Haken 9 eine Vorspannung erzielt, dazu ist es vorteilhaft, wenn die Verschlusshaken eine Neigung aufweisen, sich also schräg zylindrisch erstrecken. Zudem ist es vorteilhaft, dass die Verschlusselemente 7 am Ende der Anschlussstutzen 10 angeordnet sind. Dadurch wird sichergestellt, dass die isolierte Baugruppe 1 bis ganz ans Ende nicht aufspringt sondern die Halbschalen fest aneinander anliegen. Als vorteilhaft hat sich auch gezeigt, wenn in der Verzweigung bzw. im Bogen im Abbug ein weiteres Verschlusselement 16 angeordnet ist, das sicherstellt, dass auch dort die Halbschalen gut aneinander anliegen. Wie in Fig. 1 gut ersichtlich, ist es vorteilhaft wenn Laschenaussparungen 14 um die Verschlusshaken 9 angeordnet sind, in denen die Verschlusslaschen 8 bei einer verschlossenen isolierten Baugruppe 1 versenkt angeordnet sind, damit nichts hervorsteht was dazu führen könnte, dass die Baugruppe 1 ungewollt öffnen würde. Die Tiefe der Laschenaussparung 14 entspricht der Dicke der Verschlusslaschen 8. Die Verschlusslaschen 8 erstecken sich zumindest teilweise entlang des Umfangs der gegenüberliegenden Gehäusehalbschale 3. Fig. 2 zeigt die erfindungsgemässe isolierte Baugruppe 1 wenn sie noch geöffnet ist. Gut ersichtlich sind die darin vorzugsweise angeordneten Schnellkupplungen 6, vorzugsweise für jeden Anschlussstutzen 10 eine. Dargestellt ist ein T-Stück, wobei auch ein Winkelstück oder andere Formstücke denkbar sind. Die isolierte Baugruppe 1 beinhaltet zwei Isolationshalbschalen 2, welche sich gegenüberliegen und aus einem isolierenden Kunststoff vorzugsweise eine PUR, EPP oder XPE hergestellt sind. Die Baugruppe 1 beinhaltet ebenso jeweils eine Gehäusehalbschale 3 die jeweils die äussere Umfangsmantelfläche 4 der Isolationshalbschale 2 umgibt. Zwischen den Gehäusehalbschalen 3, ist ein verbindendes Scharnier 5 angeordnet, wobei das Scharnier 5 integral an den beiden Gehäusehalbschalen 3 angeordnet ist, vorzugsweise wird dazu ein Scharnier 5 gleich mit angespritzt und ist aus demselben Material oder beim Spritzgiessend der Gehäusehalbschalen mit umspritzt. Des Weiteren weisen die Gehäusehalbschalen 3 integral angeordnete Verschlusselemente 7 auf. Die Verschlusselemente 7 sind vorzugsweise durch Verschlusslaschen 8 und Verschlusshaken 9 gebildet, wobei die einen an der einen Gehäusehalbschale 3 und die anderen an der anderen Gehäusehalbschale 3 angeordnet sind. Die angeschlossenen, isolierten Rohrleitungen 12 sind von einem Aufnahmering 11 umgeben.

Denn in der Regel weisen die vorisolierten Rohrleitungen 12, die an die Baugruppe 1 anzuschliessen sind, grosse Toleranzen in ihren Abmassen auf, wodurch ein optimales Umfassen der Rohrleitung 12 von der Baugruppe 1 nicht gewährleistet werden kann. Durch den Aufnahmering 11 wird die Rohrleitung 12 in eine vorgegebene Form gepresst und ist somit immer gleich. Vorzugsweise weist die Isolationshalbschale 2 dazu eine entsprechende Negativform auf, die als konkave Aussparung 15 ausgebildet ist, in der der Aufnahmering 11 formschlüssig angeordnet ist.

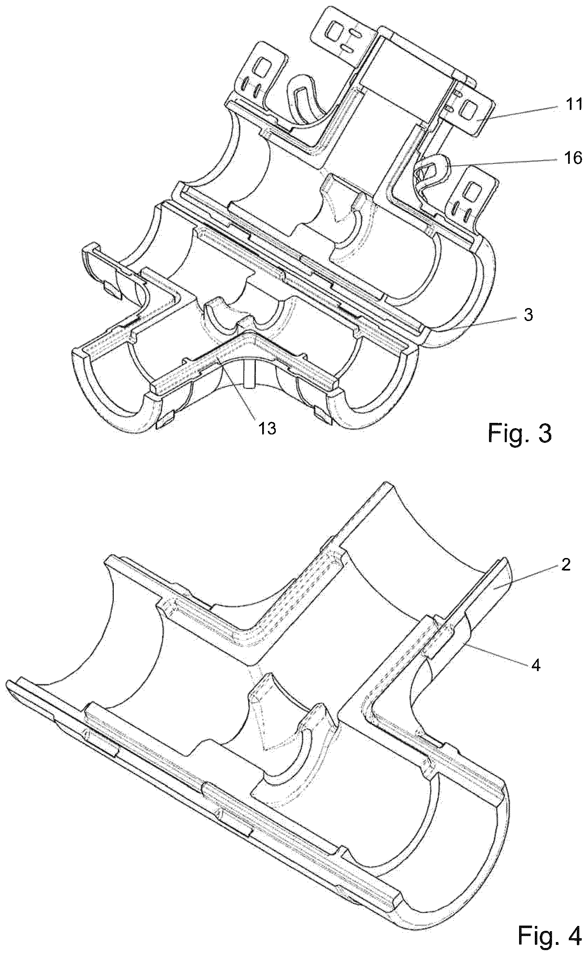

Fig. 3 zeigt die Halbschalen 2, 3 in leicht geöffnetem Zustand ohne die eingelegten Schnellkupplungen 6. Gut ersichtlich sind die beiden Isolationshalbschalen 2 an denen Dicht-Positionselemente 13 angeordnet sind, damit die Halbschalen beim Schliessen der Baugruppe 1 genau zueinander ausgerichtet sind und sich auch nicht mehr gegenseitig verschieben lassen. Die Dicht-Positionselemente 13 sind vorzugsweise als Nut- und Federverbindung ausgebildet und in den Isolationshalbschalen 2 angeordnet. Fig. 4 zeigt eine separate Isolationshalbschale 2 die noch nicht von der Gehäusehalbschale 3 umfasst ist.

### Bezugszeichenliste

- 1: Isolierte Baugruppe
- 2: Isolationshalbschale
- 3: Gehäusehalbschale
- 4: Äussere Umfangsmantelfläche der Isolationshalbschale
- 5: Scharnier
- 6: Schnellkupplung
- 7: Verschlusselement
- 8: Verschlusslasche
- 9: Verschlusshaken
- 10: Anschlussstutzen
- 11: Aufnahmering
- 12: Angeschlossene Rohrleitung
- 13: Dicht-Positionselemente
- 14: Laschenaussparung
- 15: Konkave Aussparung
- 16: Verschlusselement in Verzweigung

## Patentansprüche

1. Isolierte Baugruppe (1) zur Verbindung von Rohrleitungen, beinhaltend zwei Isolationshalbschalen (2) aus einem isolierenden Kunststoff, jeweils eine Isolationshalbschale umgebende Gehäusehalbschale (3), wobei die Gehäusehalbschale (3) die äussere Umfangmantelfläche (4) der Isolationshalbschale (2) umgibt und mindestens ein die Gehäusehalbschalen (3) verbindendes Scharnier (5), wobei die isolierte Baugruppe (1) Anschlussstutzen (10) aufweist und mindestens eine von den Isolationshalbschalen (2) formschlüssig umgebene Schnellkupplung beinhaltet, wobei sich die Schnellkupplung dadurch auszeichnet, dass ein Rohrende durch blosses Einschieben bis zu einem Anschlag in der Schnellkupplung fixierbar ist, und wobei an den Gehäusehalbschalen (3) integrale Verschlusselemente (7) angeordnet sind, wobei in den Anschlussstutzen (10) jeweils ein Aufnahmering (11) zum Umfassen einer anzuschliessenden, isolierten Rohrleitung (12) angeordnet ist.

2. Isolierte Baugruppe (1) nach Anspruch 1, **dadurch gekennzeichnet, dass** die Verschlusselemente (7) einteilig an den Gehäusehalbschalen (3) angeordnet und aus demselben Material sind.

3. Isolierte Baugruppe (1) nach einem der Ansprüche 1 oder 2, **dadurch gekennzeichnet, dass** die Verschlusselemente (7) jeweils mindestens als eine Verschlusslasche (8) und einen Verschlusshaken (9) ausgebildet sind, wobei die Verschlusslasche (8) im Verschlusshaken (9) zum Schliessen der isolierten Baugruppe (1) eingehängt wird.

4. Isolierte Baugruppe (1) nach einem der Ansprüche 1 bis 3, **dadurch gekennzeichnet, dass** die Verschlusslaschen (8) elastisch ausgebildet sind.

5. Isolierte Baugruppe (1) nach einem der Ansprüche 1 bis 4, **dadurch gekennzeichnet, dass** die Verschlusselemente (7) jeweils am Ende eines jeden Anschlussstutzens (10) der isolierten Baugruppe (1) angeordnet sind.

6. Isolierte Baugruppe (1) nach einem der Ansprüche 1 bis 5, **dadurch gekennzeichnet, dass** die Verschlusslasche (8) zumindest teilweises um den Umfang des Anschlussstutzens der gegenüberliegenden Gehäusehalbschale anliegt.

7. Isolierte Baugruppe (1) nach einem der Ansprüche 1 bis 6, **dadurch gekennzeichnet, dass** die Isolierte Baugruppe (1) als T-Stück oder Winkelstück, Muffe oder ähnliche Formstücke ausgebildet ist.

8. Isolierte Baugruppe (1) nach einem der Ansprüche 1 bis 7, **dadurch gekennzeichnet, dass** die Isolationshalbschalen (1) aus einem der Kunststoffe PUR, EPP oder XPE hergestellt sind.

9. Isolierte Baugruppe (1) nach einem der Ansprüche 1 bis 8, **dadurch gekennzeichnet, dass** die Gehäusehalbschalen (3) aus TPE sind.

10. Isolierte Baugruppe (1) nach einem der Ansprüche 1 bis 9, **dadurch gekennzeichnet, dass** das Scharnier (5) integral zwischen den beiden Gehäusehalbschalen (3) angeformt ist.

11. Isolierte Baugruppe (1) nach einem der Ansprüche 1 bis 10, **dadurch gekennzeichnet, dass** die Isolationshalbschalen (2) gegenseitig ineinander steckbare Dicht- Positionselemente (13) aufweisen um gegenseitig genau positioniert zu sein.

## Claims

1. Insulated subassembly (1) for connecting pipelines, containing two insulating half shells (2) made from an insulating plastics, in each case a housing half shell (3) surrounding an insulating half shell, wherein the housing half shell (3) surrounds the outer peripheral surface (4) of the insulating half shell (2), and at least one hinge (5) connecting the housing half shells (3), wherein the insulated subassembly (1) has connecting pieces (10) and contains at least one quick coupling positively surrounded by the insulating half shells (2), wherein the quick coupling is **characterized in that** a pipe end can be fixed simply by being inserted as far as a stop in the quick coupling, and wherein integral closure elements (7) are arranged on the housing half shells (3), wherein a respective receiving ring (11) for encompassing an insulated pipeline (12) to be connected is arranged in the connecting pieces (10).

2. Insulated subassembly (1) according to Claim 1, **characterized in that** the closure elements (7) are arranged in one piece on the housing half shells (3) and are made from the same material.

3. Insulated subassembly (1) according to one of Claims 1 or 2, **characterized in that** the closure elements (7) in each case are configured at least as a closure tab (8) and a closure hook (9), wherein the closure tab (8) is hooked into the closure hook (9) for closing the insulated subassembly (1).

4. Insulated subassembly (1) according to one of Claims 1 to 3, **characterized in that** the closure tabs (8) are configured to be resilient.

5. Insulated subassembly (1) according to one of Claims 1 to 4, **characterized in that** the closure elements (7) are arranged in each case at the end of each connecting piece (10) of the insulated subassembly (1).

6. Insulated subassembly (1) according to one of Claims 1 to 5, **characterized in that** the closure tab (8) bears at least partially around the periphery of the connecting piece of the opposing housing half shell.

7. Insulated subassembly (1) according to one of Claims 1 to 6, **characterized in that** the insulated subassembly (1) is configured as a T-piece or angled piece, sleeve or similar shaped pieces.

8. Insulated subassembly (1) according to one of Claims 1 to 7, **characterized in that** the insulating half shells (1) are manufactured from one of the plastics PUR, EPP or XPE.

9. Insulated subassembly (1) according to one of Claims 1 to 8, **characterized in that** the housing half shells (3) are made from TPE.

10. Insulated subassembly (1) according to one of Claims 1 to 9, **characterized in that** the hinge (5) is integrally formed between the two housing half shells (3).

11. Insulated subassembly (1) according to one of Claims 1 to 10, **characterized in that** the insulating half shells (2) have sealing and positioning elements (13) which can be mutually inserted into one another in order to be accurately positioned relative to one another.

## Revendications

1. Agencement isolé (1) servant à la connexion de conduites tubulaires, comportant deux demi-coques d'isolation (2) constituées d'une matière synthétique isolante, respectivement une demi-coque de boîtier (3) entourant la demi-coque d'isolation, la demi-coque de boîtier (3) entourant la surface d'enveloppe périphérique extérieure (4) de la demi-coque d'isolation (2), et au moins une charnière (5) connectant les demi-coques de boîtier (3), l'agencement isolé (1) présentant des tubulures de raccordement (10) et comportant au moins un raccord rapide entouré avec complémentarité de formes par les demi-coques d'isolation (2), le raccord rapide étant **caractérisé en ce qu'**une extrémité tubulaire peut être fixée dans le raccord rapide par simple introduction jusqu'à une butée, et des éléments de fermeture (7) d'un seul tenant étant disposés sur les demi-coques de boîtier (3), une bague de réception (11) étant disposée respectivement dans les tubulures de raccordement (10) pour enserrer une conduite tubulaire (12) isolée à raccorder.

2. Agencement isolé (1) selon la revendication 1, **caractérisé en ce que** les éléments de fermeture (7) sont disposés d'une seule pièce sur les demi-coques de boîtier (3) et sont constitués du même matériau.

3. Agencement isolé (1) selon l'une des revendications 1 ou 2, **caractérisé en ce que** les éléments de fermeture (7) sont réalisés respectivement au moins sous la forme d'une languette de fermeture (8) et d'un crochet de fermeture (9), la languette de fermeture (8) étant accrochée dans le crochet de fermeture (9) pour la fermeture de l'agencement isolé (1).

4. Agencement isolé (1) selon l'une des revendications 1 à 3, **caractérisé en ce que** les languettes de fermeture (8) sont réalisées de manière élastique.

5. Agencement isolé (1) selon l'une des revendications 1 à 4, **caractérisé en ce que** les éléments de fermeture (7) sont disposés respectivement à l'extrémité de chaque tubulure de raccordement (10) de l'agencement isolé (1).

6. Agencement isolé (1) selon l'une des revendications 1 à 5, **caractérisé en ce que** la languette de fermeture (8) s'appuie au moins partiellement autour de la tubulure de raccordement de la demi-coque de boîtier en regard.

7. Agencement isolé (1) selon l'une des revendications 1 à 6, **caractérisé en ce que** l'agencement isolé (1) est réalisé sous forme de pièce en T ou de pièce coudée, de manchon ou de pièces façonnées similaires.

8. Agencement isolé (1) selon l'une des revendications 1 à 7, **caractérisé en ce que** les demi-coques d'isolation (1) sont fabriquées à partir de l'une des matières synthétiques que sont PUR, EPP ou XPE.

9. Agencement isolé (1) selon l'une des revendications 1 à 8, **caractérisé en ce que** les demi-coques de boîtier (3) sont fabriquées à partir de TPE.

10. Agencement isolé (1) selon l'une des revendications 1 à 9, **caractérisé en ce que** la charnière (5) est formée d'un seul tenant entre les deux demi-coques de boîtier (3) .

11. Agencement isolé (1) selon l'une des revendications 1 à 10, **caractérisé en ce que** les demi-coques d'isolation (2) présentent des éléments d'étanchéité et de positionnement (13) pouvant être insérés mutuellement l'un dans l'autre afin d'être positionnés exactement l'un par rapport à l'autre.
